(19) Europäisches Patentamt
European Patent Office
Office européen des brevets

(11) **EP 4 177 304 A1**

(12) **EUROPEAN PATENT APPLICATION**
published in accordance with Art. 153(4) EPC

(43) Date of publication:
**10.05.2023 Bulletin 2023/19**

(21) Application number: **20943975.1**

(22) Date of filing: **24.11.2020**

(51) International Patent Classification (IPC):
**C08K 5/3445** (2006.01)       **C08L 77/00** (2006.01)
**C08L 101/00** (2006.01)       **C09K 3/16** (2006.01)

(52) Cooperative Patent Classification (CPC):
**C08K 5/3445; C08L 77/00; C08L 101/00;
C09K 3/16**

(86) International application number:
**PCT/JP2020/043639**

(87) International publication number:
**WO 2022/009445 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2020   JP 2020116084**

(71) Applicant: **Sanyo Chemical Industries, Ltd.
Kyoto-shi, Kyoto 605-0995 (JP)**

(72) Inventors:
• **SUGIMOTO, Yuko
  Kyoto-shi, Kyoto 605-0995 (JP)**
• **FUJITA, Shinichi
  Kyoto-shi, Kyoto 605-0995 (JP)**

(74) Representative: **Mewburn Ellis LLP
Aurora Building
Counterslip
Bristol BS1 6BX (GB)**

(54) **ANTISTATIC AGENT, ANTISTATIC RESIN COMPOSITION, AND MOLDED ARTICLE**

(57)    An object of the present invention is to provide an antistatic agent which imparts excellent antistatic properties to thermoplastic resins. The antistatic agent (Z) of the present invention contains a block polymer (A) having a block of a polyamide (a) and a block of a polyether (b1) as structure units, wherein the polyether (b1) contains propylene oxide (PO) and ethylene oxide (EO) as constituent monomers, and a weight ratio of the propylene oxide (PO) to the ethylene oxide (EO), i.e., propylene oxide (PO)/ethylene oxide (EO), is 1/99 to 25/75.

**Description**

TECHNICAL FIELD

The present invention relates to an antistatic agent, an antistatic resin composition, and a molded article.

BACKGROUND ART

Conventionally, an antistatic agent has been commonly used as a method of imparting antistatic properties to highly insulating thermoplastic resins. Methods of imparting antistatic properties using an antistatic agent include a known method in which a small amount of polyether ester amide serving as a polymer antistatic agent (for example, see Patent Literature 1) is kneaded into a resin.

However, the antistatic properties imparted by the method of kneading the polymer antistatic agent are considered to be insufficient.

CITATION LIST

- Patent Literature

Patent Literature 1: JP H08-12755 A

SUMMARY OF INVENTION

- Technical Problem

An object of the present invention is to provide an antistatic agent which imparts excellent antistatic properties to thermoplastic resins.

- Solution to Problem

As a result of extensive studies to achieve the object, the present inventors arrived at the present invention. Specifically, the present invention provides an antistatic agent (Z) containing a block polymer (A) having a block of a polyamide (a) and a block of a polyether (b1) as structure units, wherein the polyether (b1) contains propylene oxide (PO) and ethylene oxide (EO) as constituent monomers, and a weight ratio of the propylene oxide (PO) to the ethylene oxide (EO), i.e., propylene oxide (PO)/ethylene oxide (EO), is 1/99 to 25/75; an antistatic resin composition (Y) containing the antistatic agent (Z) and a thermoplastic resin (E); and a molded article obtained by molding the antistatic resin composition (Y).

- Advantageous Effects of Invention

The antistatic agent (Z) of the present invention achieves the following effects.

(1) The antistatic agent (Z) imparts excellent antistatic properties.
(2) The antistatic agent (Z) imparts excellent mechanical strength (mechanical properties) to molded articles.
(3) The antistatic agent (Z) imparts excellent continuous moldability (demoldability) during molding.

BRIEF DESCRIPTION OF DRAWINGS

<Polyamide (a)>

Examples of the polyamide (a) in the present invention include those obtained by ring-opening polymerization or polycondensation of an amide-forming monomer (a0).

Examples of the amide-forming monomer (a0) include a lactam (a01) and an aminocarboxylic acid (a02). The amide-forming monomer (a0) may be a combination of a diamine (a03) and a dicarboxylic acid (a04).

Specifically, examples of the polyamide (a) include those obtained by ring-opening polymerization or polycondensation of the lactam (a01) or the aminocarboxylic acid (a02) and a polycondensate of the diamine (a03) and the dicarboxylic acid (a04).

Examples of the lactam (a01) include lactams having 4 to 20 carbon atoms (hereinafter, the number of carbon atoms may be abbreviated as C) (e.g., γ-lactam, δ-lactam, ε-caprolactam, enantholactam, caprylic lactam, ω-laurolactam, and undecanolactam).

Examples of ring-opening polymers of the lactam (a01) include nylon 4, nylon 5, nylon 6, nylon 7, nylon 8, nylon 11, and nylon 12.

Examples of the aminocarboxylic acid (a02) include C6-C12 aminocarboxylic acids (e.g., ω-aminocaproic acid, ω-aminoenanthic acid, ω-aminocaprylic acid, ω-aminopelargonic acid, ω-aminocapric acid, 11-aminoundecanoic acid, 12-aminododecanoic acid, and mixtures of these).

Examples of the diamine (a03) include C2-C40 diamines, such as aliphatic diamines, alicyclic diamines, aromatic diamines, aromatic aliphatic diamines, and mixtures of these.

Examples of the aliphatic diamines include C2-C40 aliphatic diamines (e.g., ethylenediamine, propylenediamine, hexamethylenediamine, decamethylenediamine, 1,12-dodecanediamine, 1,18-octadecanediamine, and 1,20-eicosanediamine).

Examples of the alicyclic diamine include C5-C40 alicyclic diamines (e.g., 1,3- or 1,4-cyclohexanediamine, isophoronediamine, 4,4'-diaminocyclohexylmethane, and 2,2-bis(4-aminocyclohexyl)propane).

Examples of the aromatic diamines include C6-C40 aromatic diamines (e.g., p-phenylenediamine, 2,4- or 2,6-toluenediamine, and 2,2-bis(4,4'-diaminophenyl)propane).

Examples of the aromatic aliphatic diamines include C7-C20 aromatic aliphatic diamines (e.g., xylylenediamine, bis(aminoethyl)benzene, bis(aminopropyl)benzene, and bis(aminobutyl)benzene).

Examples of the dicarboxylic acid (a04) include C2-C40 dicarboxylic acids. Examples include aliphatic dicarboxylic acids; aromatic ring-containing dicarboxylic acids; alicyclic dicarboxylic acids; derivatives of these dicarboxylic acids, such as acid anhydrides, lower (C1-C4) alkyl esters, and dicarboxylic acid salts (e.g., alkali metal salts, such as lithium, sodium, and potassium salts); and mixtures of two or more of these.

Examples of the aliphatic dicarboxylic acids include C2-C40 (preferably C4-C20, more preferably C6-C12 in terms of antistatic properties) aliphatic dicarboxylic acids (e.g., succinic acid, glutaric acid, adipic acid, pimelic acid, suberic acid, azelaic acid, sebacic acid, undecane diacid, dodecane diacid, maleic acid, fumaric acid, and itaconic acid).

Examples of the aromatic ring-containing dicarboxylic acids include C8-C40 (preferably C8-C16, more preferably C8-C14 in terms of antistatic properties) aromatic ring-containing dicarboxylic acids (e.g., orthophthalic acid, isophthalic acid, terephthalic acid, 2,6- or 2,7-naphthalenedicarboxylic acid, diphenyl-4,4'-dicarboxylic acid, diphenoxyethanedicarboxylic acid, toluenedicarboxylic acid, xylylenedicarboxylic acid, and 5-sulfoisophthalic acid alkali metal (as described above) salts).

Examples of the alicyclic dicarboxylic acids include C5-C40 (preferably C6-C18, more preferably C8-C14 in terms of antistatic properties) alicyclic dicarboxylic acids (e.g., cyclopropanedicarboxylic acid, 1,4-cyclohexanedicarboxylic acid, cyclohexenedicarboxylic acid, dicyclohexyl-4,4'-dicarboxylic acid, and camphoric acid).

The amide-forming monomer (a0) is preferably ε-caprolactam or 12-aminododecanoic acid in terms of antistatic properties. The amide-forming monomer (a0) is also preferably a combination of adipic acid and hexamethylenediamine.

Preferably, the polyamide (a) is a polymer having a volume specific resistance greater than $1 \times 10^{11}$ Ω·cm.

The volume specific resistance in the present invention is a numerical value determined under an atmospheric environment at 23°C with 50% RH according to ASTM D257 (1984).

The polyamide (a) may be produced by a method in which the amide-forming monomer (a0) is ring-opening polymerized or polycondensed in the presence of a molecular weight adjusting agent. The molecular weight adjusting agent may be either a diamine or a dicarboxylic acid. Examples of the diamine and the dicarboxylic acid include compounds mentioned as examples of the diamine (a03) (C2-C40, preferably C4-C20) and the dicarboxylic acid (a04) (C2-C40, preferably C4-C20), respectively. One of these compounds may be used alone, or two or more of these may be used.

The amount of the molecular weight adjusting agent used is preferably 2 to 80 wt%, more preferably 4 to 75 wt% based on the total weight of the amide-forming monomer (a0) and the molecular weight adjusting agent in terms of antistatic properties.

The number average molecular weight of the polyamide (a) (hereinafter abbreviated as Mn, which is determined by gel permeation chromatography (GPC)) is preferably 200 to 5,000, more preferably 500 to 4,000, particularly preferably 800 to 3,000 in terms of antistatic properties and moldability.

The Mn of the polymer in the present invention can be determined by gel permeation chromatography (GPC) under the following conditions.

   · Device (as an example): "HLC-8120" (available from Tosoh Corporation)
   · Column (as an example): "TSK gel GMHXL" (available from Tosoh Corporation) (two columns) and "TSK gel Multipore HXL-M" (available from Tosoh Corporation) (one column)
   · Sample solution: 0.3 wt% ortho dichlorobenzene solution
   · Amount of solution added: 100 ul
   · Flow rate: 1 ml/min

· Measurement temperature: 135°C
· Detecting device: refractive index detector
· Reference material: standard polystyrene (TSK standard POLYSTYRENE) 12 samples (molecular weight: 500, 1,050, 2,800, 5,970, 9,100, 18,100, 37,900, 96,400, 190,000, 355,000, 1,090,000, 2,890,000) (available from Tosoh Corporation)

<Polyether (b1)>

Examples of the polyether (b1) in the present invention include those described in JP 3488163 B, such as polyether diol (b1-1), polyether diamine (b1-2), and modified products (b1-3) thereof.

The polyether (b1) contains propylene oxide (hereinafter abbreviated as PO) and ethylene oxide (hereinafter abbreviated as EO) as constituent monomers. The weight ratio of the (PO) to the (EO) ((PO)/(EO)) is 1/99 to 25/75, preferably 2/98 to 20/80, more preferably 3/97 to 15/85.

When the weight ratio ((PO)/(EO)) is less than 1/99, the antistatic properties and continuous moldability (demoldability) are poor. When the weight ratio is more than 25/75, the mechanical strength (mechanical properties) and antistatic properties are poor.

When the diol (b0) described later is ethylene glycol, the weight thereof is calculated as the weight of (EO). When the diol (b0) is 1,2-propylene glycol, the weight thereof is calculated as the weight of (PO).

Examples of the polyether diol (b1-1) include those obtained by addition reaction of an alkylene oxide (hereinafter abbreviated as AO) to a diol (b0). Specific examples include those represented by the formula (1):

$$H\text{-}(OR^1)_a\text{-}O\text{-}E^1\text{-}O\text{-}(R^2O)_b\text{-}H \qquad (1).$$

$E^1$ in the formula (1) is a residue obtained by removing all hydroxy groups from the diol (b0).

$R^1$ and $R^2$ in the formula (1) are each independently a C2-C4 alkylene group, a C5-C12 alkylene group, a styrene group, or a chloromethyl group. Examples of the C2-C4 alkylene group include an ethylene group, a 1,2- or 1,3-propylene group, and a 1,2-, 1,3-, 1,4-, or 2,3-butylene group.

The letters "a" and "b" in the formula (1) are the average numbers of moles of ($OR^1$) and ($R^2O$) added, respectively, and are each independently 1 to 300, preferably 2 to 250, more preferably 10 to 100.

When "a" and "b" in the formula (1) are each 2 or greater, $R^1$ and $R^2$ may be the same as or different from each other, and $(OR^1)_a$ and $(R^2O)_b$ moieties may be bonded in a random form or a block form.

Examples of the diol (b0) include C2-C12 aliphatic dihydric alcohols, C5-C12 alicyclic dihydric alcohols, C6-C18 aromatic dihydric alcohols, and tertiary amino-containing diols.

Examples of the C2-C12 aliphatic dihydric alcohols include ethylene glycol (hereinafter abbreviated as EG), 1,2-propylene glycol, 1,4-butanediol, 1,6-hexanediol, neopentyl glycol, and 1,12-dodecanediol.

Examples of the C5-C12 alicyclic dihydric alcohols include 1,4-di(hydroxymethyl)cyclohexane and 1,5-di(hydroxymethyl)cycloheptane.

Examples of the C6-C18 aromatic dihydric alcohols include monocyclic aromatic dihydric alcohols (xylylenediol, hydroquinone, catechol, resorcin, and urushiol) and polycyclic aromatic dihydric alcohols (e.g., bisphenol A, bisphenol F, bisphenol S, 4,4'-dihydroxydiphenyl-2,2-butane, dihydroxybiphenyl, dihydroxynaphthalene, and binaphthol).

Examples of the tertiary amino-containing diols include bishydroxyalkylates of C1-C12 aliphatic or alicyclic primary amines (e.g., methylamine, ethylamine, cyclopropylamine, 1-propylamine, 2-propylamine, pentylamine, isopentylamine, cyclopentylamine, hexylamine, cyclohexylamine, heptylamine, nonylamine, decylamine, undecylamine, and dodecylamine), and bishydroxyalkylates of C6-C12 aromatic primary amines (e.g., aniline and benzylamine).

Of these, the diol (b0) is preferably a C2-C12 aliphatic dihydric alcohol or a C6-C18 aromatic dihydric alcohol, more preferably EG or bisphenol A, particularly preferably EG, in terms of antistatic properties.

The polyether diol (b1-1) can be produced by addition reaction of an AO to the diol (b0).

The AO is a C2-C4 AO (EO, 1,2-propylene oxide (PO), 1,3-propylene oxide, 1,2-, 1,3-, 1,4-, or 2,3-butylene oxide), or a combination of two or more of these. If necessary, an additional AO (e.g., C5-C12 α-olefin oxide, styrene oxide, or epihalohydrin (e.g., epichlorohydrin)) may be also used in a small portion (30 wt% or less based on the total weight of AOs).

The bonding form when two or more AOs are used in combination may be either a random form or a block form.

The addition reaction of an AO can be carried out by a known method, for example, at a temperature of 100°C to 200°C in the presence of an alkaline catalyst.

Examples of the polyetherdiamine (b1-2) include those represented by the formula (2):

$$H_2N\text{-}R^3\text{-}(OR^4)_c\text{-}O\text{-}E^2\text{-}O\text{-}(R^5O)_d\text{-}R^6\text{-}NH_2 \qquad (2).$$

$E^2$ in the formula (2) is a residue obtained by removing all hydroxy groups from the diol (b0).

Examples of the diol (b0) and preferred scope thereof are the same as those mentioned above for the polyether diol (b1-1).

$R^3$, $R^4$, $R^5$, and $R^6$ in the formula (2) are each independently a C2-C4 alkylene group, a C5-C12 alkylene group, a styrene group, or a chloromethyl group. Examples of the C2-C4 alkylene groups include those mentioned as examples of $R^1$ and $R^2$ in the formula (1).

The letters "c" and "d" in the formula (2) are the average numbers of moles of $(OR^4)$ and $(R^5O)$ added, respectively, and are each independently 1 to 300, preferably 2 to 250, more preferably 10 to 100.

When "c" and "d" in the formula (2) are each 2 or greater, $R^4$ and $R^5$ may be the same as or different from each other, and $(OR^4)_c$ and $(R^5O)_d$ moieties may be bonded in a random form or a block form.

The polyetherdiamine (b1-2) can be obtained by converting all hydroxy groups of the polyether diol (b1-1) to alkyl amino groups. For example, the polyetherdiamine (b1-2) can be produced by reacting the polyether diol (b1-1) with acrylonitrile, and hydrogenating the resulting cyanoethylate.

Examples of the modified products (b1-3) include an aminocarboxylic acid modified product (terminated with an amino group) of the polyether diol (b1-1) or the polyetherdiamine (b1-2), an isocyanate modified product (terminated with an isocyanate group) of the polyether diol (b1-1) or the polyetherdiamine (b1-2), and an epoxy modified product (terminated with an epoxy group) of the polyether diol (b1-1) or the polyetherdiamine (b1-2).

The aminocarboxylic acid modified product can be obtained by reacting the polyether diol (b1-1) or the polyetherdiamine (b1-2) with an aminocarboxylic acid or a lactam.

The isocyanate modified product can be obtained by reacting the polyether diol (b1-1) or the polyetherdiamine (b1-2) with a polyisocyanate, or by reacting the polyetherdiamine (b1-2) with phosgene.

The epoxy modified product can be obtained by reacting the polyether diol (b1-1) or the polyetherdiamine (b1-2) with a diepoxide (an epoxy resin such as diglycidyl ether, diglycidyl ester, or alicyclic diepoxide; epoxy equivalent: 85 to 600), or by reacting the polyether diol (b1-1) with epihalohydrin (e.g., epichlorohydrin).

The polyether (b1) has a number average molecular weight (Mn) of preferably 1,000 to 3,500, more preferably 1,200 to 3,000, particularly preferably 1,500 to 2,500 in terms of antistatic properties, heat resistance, and the reactivity with the polyamide (a).

The total weight of (EO) and (PO) is preferably 85 to 100% by weight, more preferably 95 to 100% by weight, particularly preferably 100% by weight based on the total weight of the constituent monomer (AO) of the polyether (b1) .

<Block polymer (A)>

The block polymer (A) in the antistatic agent (Z) of the present invention contains a block of the polyamide (a) and a block of the polyether (b1) as structure units. The block polymer (A) may contain one or more polyamides (a) and one or more polyethers (b1).

The block polymer (A) is preferably a polyether ester amide of a block of the polyamide (a) and a block of the polyether diol (b1-1) as the polyether (b1) in terms of antistatic properties.

In the block polymer (A), the weight ratio of a block of the polyamide (a) to a block of the polyether (b1) (polyamide (a)/polyether (b1)) is preferably 10/90 to 80/20, more preferably 20/80 to 75/25, particularly preferably 30/70 to 65/35 in terms of antistatic properties and water resistance.

Examples of the structure in which a block of the polyamide (a) and a block of the polyether (b1) constituting the block polymer (A) are bonded include a (a)-(b1) structure, a (a)-(b1)-(a) structure, a (b1)-(a)-(b1) structure, and a [(a)-(b1)]n structure (n indicates the average repeating number).

Preferably, the structure of the block polymer (A) is the [(a)-(b1)]n structure in which the polyamide (a) and the polyether (b1) are alternately repeatedly bonded in terms of conductivity.

The "n" in the [(a)-(b1)]n structure is preferably 2 to 50, more preferably 2.3 to 30, particularly preferably 2.7 to 20, most preferably 3 to 10 in terms of antistatic properties and mechanical strength (mechanical properties). The "n" can be determined from the Mn of the block polymer (A) and $^1$H-NMR analysis.

The block polymer (A) has a Mn of preferably 5,000 to 100,000, more preferably 10,000 to 50,000, particularly preferably 15,000 to 35,000 in terms of mechanical strength (mechanical properties) and antistatic properties of the resulting molded article described later.

In the case where the block polymer (A) has a structure in which a block of the polyamide (a) and a block of the polyether (b1) are bonded via an ester bond, an amide bond, an ether bond, or an imide bond, such a block polymer (A) can be produced by the following method.

Of these bonds, an ester bond and an amide bond are preferred in terms of industrial applications.

The polyamide (a) and the polyether (b1) are charged into a reaction vessel, and the mixture is reacted with stirring at a reaction temperature of 100°C to 250°C at a pressure of 0.003 to 0.1 MPa for 1 to 50 hours while water generated in amidation, esterification, or imidization (hereinafter, abbreviated as generated water) is removed from the reaction system. The polyamide (a) and the polyether (b1) are mixed at a weight ratio (polyamide (a)/polyether (b1)) of 10/90 to 80/20, preferably 20/80 to 75/25 in terms of antistatic properties and water resistance.

In the case of esterification, use of 0.05 to 0.5 wt% of a catalyst based on the total weight of the polyamide (a) and the polyether (b1) is preferred in order to promote the reaction. Examples of the catalyst include inorganic acids (e.g., sulfuric acid and hydrochloric acid), organic sulfonic acids (e.g., methanesulfonic acid, p-toluenesulfonic acid, xylenesulfonic acid, and naphthalenesulfonic acid), antimony catalysts (e.g., antimony trioxide), tin catalysts (e.g., monobutyltin oxide and dibutyltin oxide), titanium catalysts (e.g., tetrabutyl titanate, bistriethanolamine titanate, and titanium potassium oxalate), zirconium catalysts (e.g., tetrabutyl zirconate and zirconium oxyacetate), and zinc catalysts (e.g., zinc acetate). In the case of using a catalyst, after the esterification, the catalyst may be neutralized if necessary, and removed by treatment with an absorber for purification.

The generated water is removed from the reaction system, for example, by any of the following methods:

(1) a method of using an organic solvent not compatible with water (e.g., toluene, xylene, or cyclohexane) and azeotropically boiling the organic solvent and the generated water under reflux, thereby removing the generated water alone from the reaction system;

(2) a method of blowing a carrier gas (e.g., air, nitrogen, helium, argon, or carbon dioxide) into the reaction system, thereby removing the generated water from the reaction system together with the carrier gas; and

(3) a method of reducing the pressure inside the reaction system, thereby removing the generated water from the reaction system.

<Antistatic agent (Z)>

The antistatic agent (Z) of the present invention contains the block polymer (A). The antistatic agent (Z) may further contain an amide-forming monomer (c).

The weight of the amide-forming monomer (c) is preferably 2 to 12% by weight, more preferably 3 to 10% by weight, particularly preferably 4 to 8% by weight based on the weight of the block polymer (A) in terms of continuous moldability, antistatic properties, and mechanical strength (mechanical properties).

<Amide-forming monomer (c)>

Examples of an amide-forming monomer (c) include those of the amide-forming monomer (a0). In other words, examples of the amide-forming monomer (c) include the lactam (a01) and the aminocarboxylic acids (a02). The amide-forming monomer (c) may also be the combination of the diamine (a03) and the dicarboxylic acid (a04). As described below, when the amide-forming monomer (a0) remains unreacted after the reaction of the amide-forming monomer (a0) for obtaining the polyamide (a), the unreacted amide-forming monomer (a0) can serve as the amide-forming monomer (c).

The amide-forming monomer (c) is preferably the lactam (a01) or the aminocarboxylic acid (a02), more preferably the lactam (a01), particularly preferably a C6-C12 lactam in terms of continuous moldability and antistatic properties.

The antistatic agent (Z) may further contain an imidazolium salt (S) described later to improve the antistatic properties.

The weight of the imidazolium salt (S) based on the weight of the block polymer (A) is preferably 1 to 10 wt%, more preferably 2 to 8 wt%, particularly preferably 3 to 6 wt%, in terms of antistatic properties and continuous moldability.

The antistatic agent (Z) can be produced, for example, by any of the following methods (1) to (3).

(1) The amide-forming monomer (a0) is reacted to obtain the polyamide (a). The polyamide (a) and the polyether (b1) are reacted to obtain the block polymer (A). If necessary, the amide-forming monomer (c) and the imidazolium salt (S) may be mixed with the polyamide (a) and the polyether (b1) before, during, or after the reaction between the polyamide (a) and the polyether (b1).

(2) The amide-forming monomer (a0) is reacted to obtain the polyamide (a). Here, the amide-forming monomer (a0) is appropriately allowed to remain to obtain a mixture of the polyamide (a) and the amide-forming monomer (c). The mixture is reacted with the polyether (b1) to obtain the antistatic agent (Z) containing the block polymer (A) and the amide-forming monomer (c). If necessary, the imidazolium salt (S) may be mixed with a mixture containing the block polymer (A) and the amide-forming monomer (c).

(3) The amide-forming monomer (a0) is reacted to obtain the polyamide (a). The polyamide (a) is reacted with the polyether (b1) to obtain the block polymer (A). The mixture of the amide-forming monomer (c) and the imidazolium salt (S) is mixed with the block polymer (A).

Of the methods (1) to (3), the method (3) is preferred when the amide-forming monomer (c) and the imidazolium salt (S) are contained.

<Imidazolium salt (S)>

The imidazolium salt (S) in the present invention includes any of imidazolium cations and imidazolium anions, which are listed below.

Examples of the imidazolium cations of the imidazolium salt (S) include C5-C15 imidazolium cations, such as 1,3-dimethylimidazolium, 1,3-diethylimidazolium, 1-ethyl-3-methylimidazolium, 1-butyl-3-methylimidazolium, 1,2,3-trimethylimidazolium, 1,2,3,4-tetramethylimidazolium, 1-ethyl-2,3-dimethylimidazolium, 1,3-dimethyl-2-ethylimidazolium, 1,2-dimethyl-3-ethyl-imidazolium, 1,2,3-triethylimidazolium, 1,2,3,4-tetraethylimidazolium, 1,3-dimethyl-2-phenylimidazolium, 1,3-dimethyl-2-benzylimidazolium, 1-benzyl-2,3-dimethyl-imidazolium, 4-cyano-1,2,3-trimethylimidazolium, 3-cyanomethyl-1,2-dimethylimidazolium, 2-cyanomethyl-1,3-dimethylimidazolium, 4-acetyl-1,2,3-trimethylimidazolium, 3-acetylmethyl-1,2-dimethylimidazolium, 4-methylcarboxymethyl-1,2,3-trimethylimidazolium, 3-methylcarboxymethyl-1,2-dimethylimidazolium, 4-methoxy-1,2,3-trimethylimidazolium, 3-methoxymethyl-1,2-dimethylimidazolium, 4-formyl-1,2,3-trimethylimidazolium, 3-formylmethyl-1,2-dimethylimidazolium, 3-hydroxyethyl-1,2-dimethylimidazolium, 4-hydroxymethyl-1,2,3-trimethylimidazolium, and 2-hydroxyethyl-1,3-dimethylimidazolium cations.

Of these imidazolium cations, a 1-alkyl-3-alkylimidazolium cation which has C1-C3 alkyl groups at 1- and 3-positions is preferred, and a 1-ethyl-3-methylimidazolium cation is more preferred in terms of antistatic properties.

Examples of the anions of the imidazolium salt (S) include C1-C20 sulfonic acid anions (e.g., a methanesulfonic acid anion and a dodecylbenzenesulfonic acid anion) and alkyl sulfate ester anions each having a C1-C8 alkyl group (e.g., a methyl sulfate anion, an ethyl sulfate anion, and an octyl sulfate anion).

Of these anions, C1-C20 sulfonic acid anions are preferred, and a dodecylbenzene sulfonic acid anion is more preferred.

<Antistatic resin composition (Y)>

The antistatic resin composition (Y) of the present invention contains the antistatic agent (Z) and a thermoplastic resin (E) described later.

The weight ratio of the antistatic agent (Z) to the thermoplastic resin (E) (antistatic agent (Z)/thermoplastic resin (E)) is preferably 3/97 to 20/80, more preferably 5/95 to 15/85 in terms of antistatic properties and mechanical strength (mechanical properties).

Examples of the thermoplastic resin (E) include a polyphenylene ether resin (E1); vinyl resins, such as a polyolefin resin (E2) (e.g., polypropylene, polyethylene, ethylene-vinyl acetate copolymer resin (EVA), and ethylene-ethylacrylate copolymer resin), a poly(meth) acrylic resin (E3) (e.g., polymethylmethacrylate), a polystyrene resin (E4) (a vinyl group-containing aromatic hydrocarbon alone, or a copolymer containing a vinyl group-containing aromatic hydrocarbon and at least one selected from the group consisting of a (meth)acrylic acid ester, (meth)acrylonitrile, and butadiene as structure units, such as polystyrene (PS), a styrene/acrylonitrile copolymer (AN resin), an acrylonitrile/butadiene/styrene copolymer (ABS resin), a methyl methacrylate/butadiene/styrene copolymer (MBS resin), and a styrene/methyl methacrylate copolymer (MS resin)); a polyester resin (E5) (e.g., polyethylene terephthalate, polybutylene terephthalate, polycyclohexanedimethylene terephthalate, polybutylene adipate, and polyethylene adipate); a polyamide resin (E6) (e.g., nylon 66, nylon 69, nylon 612, nylon 6, nylon 11, nylon 12, nylon 46, nylon 6/66, and nylon 6/12); a polycarbonate resin (E7) (e.g., polycarbonate and polycarbonate/ABS alloy resin); a polyacetal resin (E8); and mixtures of two or more of these.

Of these, the polyolefin resin (E2), the polystyrene resin (E4), and the polycarbonate resin (E7) are preferred, and the polystyrene resin (E4) is more preferred in terms of mechanical strength (mechanical properties) and antistatic properties of the resulting molded article described later.

In addition to the block polymer (A), the amide-forming monomer (c), the imidazolium salt (S), and the thermoplastic resin (E), the antistatic resin composition (Y) of the present invention may contain a known additive for resins (G) if necessary, within a range that does not impair the effects of the present invention.

Examples of the additive for resins (G) include compatibilizers (e.g., carboxylic acid modified polypropylene), flame retardants (e.g., guanamine), pigments (e.g., titanium oxide), dyes (e.g., azo dye), nucleating agents (e.g., talc), lubricants (e.g., cabana wax), plasticizers (e.g., dioctyl phthalate), antioxidants (e.g., triphenyl phosphite), and ultraviolet absorbers (e.g., 2-(2'-hydroxy-5'-methylphenyl)benzotriazole).

The amount of the additive for resins (G) varies depending on the application. Yet, for example, it is 45 wt% or less based on the total weight of the antistatic agent (Z) and the thermoplastic resin (E). It is preferably 0.01 to 30 wt%, more preferably 0.1 to 10 wt% in terms of effect by the addition.

The antistatic resin composition (Y) of the present invention is obtained by melt-mixing the antistatic agent (Z), the thermoplastic resin (E), and, optionally, the additive for resins (G).

The melt-mixing method is generally a method including mixing pellet or powered components in a suitable mixer, for example, Henschel mixer, and then pelletizing by melt-mixing with an extruder.

The addition order of the components in melt-mixing is not limited, and methods may include, for example:

(1) melt-mixing the antistatic agent (Z), the thermoplastic resin (E), and, optionally, the additive for resins (G) together; and
(2) melt-mixing the antistatic agent (Z) and a portion of the thermoplastic resin (E) in advance to prepare a resin composition (master batch resin composition) with a high content of the antistatic agent (Z), and then melt-mixing the remaining thermoplastic resin (E) and, optionally, the additive for resins (G).

<Molded article>

The molded article of the present invention is obtained by molding the antistatic resin composition (Y). Examples of the molding method include injection molding, compression molding, calendaring molding, slush molding, rotational molding, extrusion molding, blow molding, foam molding, film molding (e.g., casting method, tenter method, and inflation method). The antistatic resin composition (Y) can be molded by any method suitable for the purpose.

The antistatic agent (Z) of the present invention imparts excellent antistatic properties to the thermoplastic resin (E). A molded article containing the antistatic agent (Z) of the present invention has excellent mechanical strength (mechanical properties) and excellent continuous moldability (demoldability) during molding.

Thus, the antistatic resin composition is widely usable as a material of housing products (home appliances, office automation (OA) machines, gaming machines, and office appliances), plastic container materials (trays for cleanrooms (e.g., IC trays), and other containers), various buffer materials, covering materials (e.g., packaging films and protective films)), sheets of flooring material, artificial grass, mats, substrates of a tape (for a semiconductor fabrication process or the like), and various molded articles (e.g., automobile parts), which are molded by various molding methods (injection molding, compression molding, calendaring molding, slush molding, rotational molding, extrusion molding, blow molding, foam molding, and film molding (e.g., casting method, tenter method, and inflation method)). Thus, the antistatic resin composition is very useful.

EXAMPLES

The present invention is described below with reference to the examples and comparative examples, but the present invention is not limited thereto. Parts in the examples represent weight parts, unless otherwise specified.

<Production Example 1>

Production of polyamide (a-1)

A stainless-steel pressure-resistant reaction vessel equipped with a stirrer, a thermometer, a heating and cooling device, a nitrogen inlet tube, and a decompression device was charged with $\varepsilon$-caprolactam (79.4 parts), terephthalic acid (11.5 parts), an antioxidant ("Irganox 1010" available from BASF Japan Ltd.) (0.3 parts), and water (6 parts). After purging with nitrogen, the mixture was hermetically heated to 220°C with stirring, and stirred at the same temperature (pressure: 0.2 to 0.3 MPa) for four hours, thus obtaining a polyamide (a-1) having a carboxy group at each end.

The polyamide (a-1) had an acid value of 78 and a Mn of 1,400.

<Production Example 2>

Production of polyamide (a-2)

A pressure-resistant reaction vessel similar to the one used in Production Example 1 was charged with $\omega$-laurolactam (82.5 parts), terephthalic acid (16.3 parts), an antioxidant ("Irganox 1010" available from BASF Japan Ltd.) (0.3 parts), and water (10 parts). After purging with nitrogen, the mixture was hermetically heated to 220°C with stirring, and stirred at the same temperature (pressure: 0.2 to 0.3 MPa) for four hours, thus obtaining a polyamide (a-2) having a carboxy group at each end.

The polyamide (a-2) had an acid value of 109 and a Mn of 1,000.

<Production Example 3>

Production of polyamide (a-3)

A pressure-resistant reaction vessel similar to the one used in Production Example 1 was charged with hexamethylenediamine (17.7 parts), adipic acid (37.1 parts), an antioxidant ("Irganox 1010" available from BASF Japan Ltd.) (0.3 parts), and water (160 parts). After purging with nitrogen, the mixture was hermetically heated to 270°C with stirring, and stirred at the same temperature (pressure: 1.7 to 1.8 MPa) for four hours, thus obtaining a polyamide (a-3) having a carboxy group at each end.

The polyamide (a-3) had an acid value of 132 and a Mn of 850.

<Production Example 4>

Block polymer (A-1)

A reaction vessel equipped with a stirrer, a thermometer, and a heating and cooling device was charged with the polyamide (a-1) (209.9 parts), the polyether (b1-1) (291.8 parts), and zirconium oxyacetate (7 parts). The mixture was heated to 240°C with stirring, and reacted under reduced pressure (0.013 MPa or less) at the same temperature for six hours, thus obtaining a block polymer (A-1) .

The block polymer (A-1) had a Mn of 22,000 and a weight ratio ((a)/(b1)) of 42/58. The results are shown in Table 1.

<Production Examples 5 to 9 and Comparative Production Examples 1 and 2>

Block polymers (A-2) to (A-6) and (Comparative A-1) and (Comparative A-2) were obtained as in Production Example 4, except for following the formulation for reaction (by parts) shown in Table 1. The results are shown in Table 1.

[Table 1]

| | | | Production Example | | | | | | Comparative Production Example | |
|---|---|---|---|---|---|---|---|---|---|---|
| | | | 4 | 5 | 6 | 7 | 8 | 9 | 1 | 2 |
| Block polymer (A) | | | A-1 | A-2 | A-3 | A-4 | A-5 | A-6 | Comparative A-1 | Comparative A-2 |
| Formulation for reaction/parts | Polyamide (a) | a-1 | 209.9 | 230.2 | 166 | 230.2 | — | 171.4 | 209.9 | 132.2 |
| | | a-2 | — | — | — | — | 186.4 | — | — | — |
| | | a-3 | — | — | — | — | — | 42.9 | — | — |
| | Polyether (b1) | b1-1 | 291.8 | — | — | — | — | — | — | — |
| | | b1-2 | — | 272.1 | — | — | 316.8 | 288.3 | — | — |
| | | b1-3 | — | — | 334.6 | — | — | — | — | — |
| | | b1-4 | — | — | — | 272.1 | — | — | — | — |
| | | Comparative Example b1-1 | — | — | — | — | — | — | 291.8 | — |
| | | Comparative Example b1-2 | — | — | — | — | — | — | — | 367.6 |
| Properties of block polymer (A) | | Mn | 22,000 | 22,000 | 26,000 | 49,000 | 16,000 | 30,000 | 27,000 | 22,000 |
| | | Weight ratio [(a)/(b1)] | 42/58 | 46/54 | 33/67 | 46/54 | 37/63 | 43/57 | 42/58 | 27/73 |

Polyether (b1)

(b1-1): PO/EO random copolymer, weight ratio ((PO)/(EO)) = 3/97, Mn: 2000
(b1-2): PO/EO random copolymer, weight ratio ((PO)/(EO)) = 10/90, Mn: 1700
(b1-3): PO/EO random copolymer, weight ratio ((PO)/(EO)) = 14/86, Mn: 2900
(b1-4): PO/EO random adduct of bisphenol A, weight ratio ((PO)/(EO)) = 5/95, Mn: 1700
(Comparative Example b1-1): polyethylene glycol (PEG), weight ratio ((PO)/(EO)) = 0/100, Mn: 2000
(Comparative Example b1-2): PO/EO random copolymer, weight ratio ((PO/EO)) = 30/70, Mn: 4000

<Example 1>

A reaction vessel equipped with a stirrer, a thermometer, and a heating and cooling device was charged with the block polymer (A-1) (100 parts) and an imidazolium salt (S-2) (2 parts). After mixing and stirring at 220°C for one hour, the mixture was taken out in the form of a strand onto a belt and pelletized, thus obtaining an antistatic agent (Z-1).

<Example 2>

A reaction vessel equipped with a stirrer, a thermometer, and a heating and cooling device was charged with the block polymer (A-1) (100 parts) and ε-caprolactam (c-1) (5 parts). After mixing and stirring at 220°C for one hour, the mixture was taken out in the form of a strand onto a belt and pelletized, thus obtaining an antistatic agent (Z-2).

<Examples 3 to 11 and Comparative Examples 1 and 2>

In each of the examples and the comparative examples, the antistatic agents (Z-3) to (Z-11) and (Comparative Example Z-1) and (Comparative Example Z-2) were obtained as in Example 1 or 2, except for following the formulation (by parts) shown in Table 2.

[Table 2]

Amide-forming monomer (c)

| | | | Example | | | | | | | | | | | Comparative Example | |
|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 |
| Antistatic agent (Z) | | | Z-1 | Z-2 | Z-3 | Z-4 | Z-5 | Z-6 | Z-7 | Z-8 | Z-9 | Z-10 | Z-11 | Comparative Example Z-1 | Comparative Example Z-2 |
| Formulation/parts | Block polymer (A) | A-1 | 100 | 100 | — | — | — | — | — | — | — | — | — | — | — |
| | | A-2 | — | — | 100 | 100 | 100 | 100 | — | — | — | — | — | — | — |
| | | A-3 | — | — | — | — | — | — | 100 | — | — | — | — | — | — |
| | | A-4 | — | — | — | — | — | — | — | 100 | — | — | — | — | — |
| | | A-5 | — | — | — | — | — | — | — | — | 100 | 100 | — | — | — |
| | | A-6 | — | — | — | — | — | — | — | — | — | 100 | — | — | — |
| | | Comparative A-1 | — | — | — | — | — | — | — | — | — | — | — | 100 | — |
| | | Comparative A-2 | — | — | — | — | — | — | — | — | — | — | — | — | 100 |
| | Amide-forming monomer (c) | c-1 | — | 5 | — | 5 | — | — | — | — | — | 8 | 5 | — | — |
| | | c-2 | — | — | — | — | 2 | — | — | — | 9 | — | — | — | — |
| | Imidazolium salt (S) | S-1 | — | — | — | — | 6 | 4 | — | — | — | — | — | — | — |
| | | S-2 | 2 | — | — | — | — | — | — | — | — | 4 | — | — | — |

12

(c-1): ε-caprolactam
(c-2): ω-laurolactam

Imidazolium salt (S)

(S-1): 1-ethyl-3-methylimidazolium dodecylbenzenesulfonate
(S-2): 1-ethyl-3-methylimidazolium ethyl sulfate

<Examples 12 to 25 and Comparative Examples 3 and 4>

In each of the examples and the comparative examples, the antistatic agent (Z) and the thermoplastic resin (E) were blended following the formulation shown in Table 3 with a Henschel mixer for three minutes. Then, the mixture was melt-kneaded in a twin-screw extruder with a vent at 90 rpm with a retention time of two minutes at 260°C, thus obtaining antistatic resin compositions (Y-1) to (Y-14) and (Comparative Example Y-1) and (Comparative Example Y-2).
Each of the resulting antistatic resin compositions (Y-1) to (Y-14) and (Comparative Example Y-1) and (Comparative Example Y-2) was evaluated according to <Evaluation method> described later. Table 3 shows the results.

Thermoplastic resin (E)

(E-1): ABS resin (product name "Cevian-V320" available from Daicel Polymer Ltd.)
(E-2): high impact PS resin (product name "HIPS 433" available from PS Japan Co., Ltd.)
(E-3): Polycarbonate resin (product name: Panlite L-1225L available from Teijin Chemicals Ltd.)

<Evaluation methods>

1. Surface specific resistance (unit: Ω)

From each resin composition, a flat plate test piece (length 100 mm, width 100 mm, thickness 2 mm) was produced using an injection molding machine (product name "PS40E5ASE" available from Nissei Plastic Industrial Co., Ltd.) at a cylinder temperature of 260°C and a mold temperature of 80°C. Each flat plate test piece was measured using an ultra megohmmeter "DSM-8103" (available from DKK-TOA CORPORATION) under an atmospheric environment at 23°C with a humidity of 40% RH.

2. Izod impact strength (unit: J/m) (Evaluation of mechanical strength)

From each resin composition, a test piece (length 63.5 mm, width 12.7 mm, thickness 3.2 mm) was produced using an injection molding machine (product name "PS40E5ASE" available from Nissei Plastic Industrial Co., Ltd.) at a cylinder temperature of 260°C and a mold temperature of 80°C. Each test piece was measured according to ASTM D256 Method A (with a notch, 3.2 mm thick).

3. Continuous moldability (Demoldability)

From each resin composition, a flat plate test piece (length 70 mm, width 70 mm, thickness 2 mm) was produced using an injection molding machine (product name "PS40E5ASE" available from Nissei Plastic Industrial Co., Ltd.) at a cylinder temperature of 260°C, a mold temperature of 80°C, and a molding cycle of 30 seconds. After 1,000 shots of injection molding, the demoldability was evaluated according to <Evaluation criteria> described below.
The demoldability was evaluated based on the following formula (1):

$$\text{Demoldability (\%)} = (D1000) \times 100/(D1) \quad (1)$$

where (D1) is the resisting force (unit: N) required for demolding at the first shot, and (D1000) is the resisting force required for demolding at the 1000th shot.

<Evaluation criteria>

Excellent: less than 1100
Good: 110% or more and less than 1200
Fair: 120% or more and less than 1300
Poor: 130% or more

[Table 3]

| | | 12 | 13 | 14 | 15 | 16 | 17 | 18 | 19 | 20 | 21 | 22 | 23 | 24 | 25 | 3 | 4 |
|---|---|---|---|---|---|---|---|---|---|---|---|---|---|---|---|---|---|
| | | | | | | | | Example | | | | | | | | Comparative Example | |
| Formulation — Antistatic resin composition (Y) — Antistatic agent (Z) | Type | Y-1 / Z-1 | Y-2 / Z-2 | Y-3 / Z-3 | Y-4 / Z-4 | Y-5 / Z-5 | Y-6 / Z-6 | Y-7 / Z-7 | Y-8 / Z-8 | Y-9 / Z-9 | Y-10 / Z-10 | Y-11 / Z-10 | Y-12 / Z-11 | Y-13 / Z-5 | Y-14 / Z-5 | Comparative Example Y-1 / Comparative Example Z-1 | Comparative Example Y-2 / Comparative Example Z-2 |
| | (Parts) | 10 | 10 | 10 | 10 | 10 | 10 | 10 | 10 | 10 | 5 | 12 | 10 | 10 | 10 | 10 | 10 |
| Thermoplastic resin (E) | Type | E-1 | E-1 | E-1 | E-1 | E-1 | E-1 | E-1 | E-1 | E-1 | E-1 | E-1 | E-1 | E-2 | E-3 | E-1 | E-1 |
| | (Parts) | 90 | 90 | 90 | 90 | 90 | 90 | 90 | 90 | 90 | 95 | 88 | 90 | 90 | 90 | 90 | 90 |
| Evaluation results | Surface specific resistance ($\Omega$) | $1.4\times10^{11}$ | $2.1\times10^{11}$ | $3.0\times10^{11}$ | $1.1\times10^{11}$ | $4.6\times10^{10}$ | $1.5\times10^{11}$ | $2.5\times10^{11}$ | $2.1\times10^{11}$ | $5.7\times10^{10}$ | $8.8\times10^{10}$ | $1.9\times10^{10}$ | $1.3\times10^{11}$ | $4.0\times10^{10}$ | $5.4\times10^{10}$ | $7.8\times10^{11}$ | $2.6\times10^{12}$ |
| | Impact strength (J/m) | 142 | 158 | 145 | 160 | 155 | 142 | 138 | 142 | 155 | 158 | 145 | 150 | 62 | 540 | 130 | 95 |
| | Continuous moldability (demoldability) | Good | Excellent | Good | Excellent | Excellent | Good | Good | Good | Excellent | Excellent | Excellent | Excellent | Excellent | Excellent | Poor | Good |

The results in Table 3 demonstrate that the antistatic resin compositions (Y) (Examples 12 to 25) containing the antistatic agents (Z) (Examples 1 to 11) of the present invention provide molded articles having lower surface specific resistance and better antistatic properties, provide molded articles having better mechanical strength (mechanical properties), and have better continuous moldability (demoldability) during molding as compared with the antistatic resin compositions (Comparative Examples 3 and 4) containing the antistatic agents (Comparative Examples 1 and 2).

INDUSTRIAL APPLICABILITY

The antistatic agent (Z) of the present invention imparts excellent antistatic properties to thermoplastic resins. The molded article has excellent mechanical strength and excellent continuous moldability (demoldability) during molding.
Thus, the antistatic resin composition is widely usable as a material of housing products (home appliances, office automation (OA) machines, gaming machines, and office appliances), plastic container materials (trays for cleanrooms (e.g., IC trays), and other containers), various buffer materials, covering materials (e.g., packaging films and protective films), sheets of flooring material, artificial grass, mats, substrates of a tape (for a semiconductor fabrication process or the like), and various molded articles (e.g., automobile parts), which are molded by various molding methods (injection molding, compression molding, calendaring molding, slush molding, rotational molding, extrusion molding, blow molding, foam molding, and film molding (e.g., casting method, tenter method, and inflation method)). Thus, the antistatic resin composition is very useful.

**Claims**

1.  An antistatic agent (Z) comprising

    a block polymer (A) having a block of a polyamide (a) and a block of a polyether (b1) as structure units, wherein the polyether (b1) comprises propylene oxide (PO) and ethylene oxide (EO) as constituent monomers, and
    a weight ratio of the propylene oxide (PO) to the ethylene oxide (EO), i.e., propylene oxide (PO)/ethylene oxide (EO), is 1/99 to 25/75.

2.  The antistatic agent (Z) according to claim 1,
    wherein the polyether (b1) has a number average molecular weight (Mn) of 1,000 to 3,500.

3.  The antistatic agent (Z) according to claim 1 or 2,
    wherein the polyamide (a) has a number average molecular weight (Mn) of 200 to 5,000.

4.  The antistatic agent (Z) according to any one of claims 1 to 3,
    wherein the block polymer (A) has a number average molecular weight (Mn) of 5,000 to 100,000.

5.  The antistatic agent (Z) according to any one of claims 1 to 4, further comprising an amide-forming monomer (c),
    wherein a weight of the amide-forming monomer (c) based on a weight of the block polymer (A) is 2 to 12 wt%.

6.  The antistatic agent (Z) according to claim 5,
    wherein the amide-forming monomer (c) is a C6-C12 lactam.

7.  The antistatic agent (Z) according to any one of claims 1 to 6, further comprising an imidazolium salt (S).

8.  An antistatic resin composition (Y) comprising:

    the antistatic agent (Z) according to any one of claims 1 to 7; and
    a thermoplastic resin (E).

9.  The antistatic resin composition (Y) according to claim 8,
    wherein a weight ratio of the antistatic agent (Z) to the thermoplastic resin (E), i.e., antistatic agent (Z)/thermoplastic resin (E), is 3/97 to 20/80.

10. A molded article obtained by molding the antistatic resin composition (Y) according to claim 8 or 9.

## INTERNATIONAL SEARCH REPORT

International application No.

PCT/JP2020/043639

### A. CLASSIFICATION OF SUBJECT MATTER
Int. Cl. C08K5/3445(2006.01)i, C08L77/00(2006.01)i, C08L101/00(2006.01)i, C09K3/16(2006.01)i
FI: C09K3/16 102L, C08K5/3445, C08L77/00, C08L101/00, C09K3/16 105D, C09K3/16 106A

According to International Patent Classification (IPC) or to both national classification and IPC

### B. FIELDS SEARCHED

Minimum documentation searched (classification system followed by classification symbols)
Int. Cl. C09K3/16, C08C81/00-85/00, C08K3/00-13/08, C08L1/00-101/14

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 6-287396 A (ASAHI CHEMICAL INDUSTRY CO., LTD.) 11 October 1994, claims 1-2, paragraphs [0001], [0015], [0016], [0019], [0023], [0030], example 6, tables 1, 2 | 1-4, 8-10 |
| Y | | 7 |
| A | | 5-6 |
| X | JP 5-78543 A (ASAHI CHEMICAL INDUSTRY CO., LTD.) 30 March 1993, claims 1-2, paragraphs [0001], [0002], [0009], [0017], [0021], [0029], examples 7-10, tables 1-3 | 1-4, 8-10 |
| Y | | 7 |
| A | | 5-6 |
| X | JP 49-42906 B1 (TORAY INDUSTRIES, INC.) 18 November 1974, claim 1, p. 1, column 2, lines 30-35, p. 2, column 3, lines 8-29, example 4, table 5 | 1-4, 8-10 |
| Y | | 7 |
| A | | 5-6 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.01.2021 | 02.02.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/043639

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-209619 A (SANYO CHEMICAL INDUSTRIES, LTD.) | 7 |
| A | 10 October 2013, claims 1-2, paragraphs [0001], [0004], [0072], examples 1-28, tables 1, 2 | 1-6, 8-10 |
| Y | JP 2015-131960 A (SANYO CHEMICAL INDUSTRIES, LTD.) | 7 |
| A | 23 July 2015, claim 1-11, paragraphs [0001], [0088], examples 1-32 | 1-6, 8-10 |
| Y | JP 2016-166332 A (SANYO CHEMICAL INDUSTRIES, LTD.) | 7 |
| A | 15 September 2016, claims 1-4, paragraphs [0001], [0004], [0099]-[0105], examples 2, 4, 6-9, 1-13 | 1-6, 8-10 |

Form PCT/ISA/210 (continuation of second sheet) (January 2015)

**INTERNATIONAL SEARCH REPORT**

Information on patent family members

| International application No. |
|---|
| PCT/JP2020/043639 |

| Patent Documents referred to in the Report | Publication Date | Patent Family | Publication Date |
|---|---|---|---|
| JP 6-287396 A | 11.10.1994 | (Family: none) | |
| JP 5-78543 A | 30.03.1993 | (Family: none) | |
| JP 49-42906 B1 | 18.11.1974 | (Family: none) | |
| JP 2013-209619 A | 10.10.2013 | (Family: none) | |
| JP 2015-131960 A | 23.07.2015 | (Family: none) | |
| JP 2016-166332 A | 15.09.2016 | (Family: none) | |

Form PCT/ISA/210 (patent family annex) (January 2015)

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0812755 A
- JP 3488163 B